(19) Europäisches Patentamt
European Patent Office
Office européen des brevets

(11) **EP 4 783 510 A1**

(12) **EUROPEAN PATENT APPLICATION**
published in accordance with Art. 153(4) EPC

(43) Date of publication:
**29.07.2026 Bulletin 2026/31**

(21) Application number: **24881408.9**

(22) Date of filing: **09.10.2024**

(51) International Patent Classification (IPC):
*H04L 5/00* *(2006.01)*

(52) Cooperative Patent Classification (CPC):
**H04L 5/00; H04W 72/0446**

(86) International application number:
**PCT/CN2024/123662**

(87) International publication number:
**WO 2025/087042 (01.05.2025 Gazette 2025/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **23.10.2023 CN 202311382150**

(71) Applicant: **HUAWEI TECHNOLOGIES CO., LTD.**
**Shenzhen 518129 (CN)**

(72) Inventors:
- **GONG, Mingxin**
  **Shenzhen, Guangdong 518129 (CN)**
- **ZOU, Tong**
  **Shenzhen, Guangdong 518129 (CN)**
- **QU, Bingyu**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **SIGNAL TRANSMISSION METHOD AND COMMUNICATION APPARATUS**

(57) A signal transmission method and a communication apparatus are provided. The signal transmission method includes: generating a first signal, where a transmission time of any element in a first synchronization sequence in the first signal is earlier than a transmission time of any element in any data sequence in a data sequence group, and a transmission time of any element in a second synchronization sequence is later than a transmission time of any element in any data sequence in the data sequence group; a transmission time of any element in a first data sequence is earlier than a transmission time of any element in a second data sequence, and a third synchronization sequence exists between a transmission time of a last element in the first data sequence and a transmission time of a first element in the second data sequence; and a length of the third synchronization sequence is the same as a length of the second synchronization sequence, and a length of the first synchronization sequence is greater than the length of the third synchronization sequence; and sending the first signal. According to this application, computational complexity of synchronization detection can be reduced.

FIG. 5

## Description

This application claims priority to Chinese Patent Application No. 202311382150.9, filed with the China National Intellectual Property Administration on October 23, 2023, and entitled "SIGNAL TRANSMISSION METHOD AND COMMUNICATION APPARATUS", which is incorporated herein by reference in its entirety.

## TECHNICAL FIELD

This application relates to the field of communication technologies, and in particular, to a signal transmission method and a communication apparatus.

## BACKGROUND

To implement uplink synchronization, a terminal device prepends a preamble (preamble) to and appends a post-amble (post-amble) to a data signal. A base station performs timing by detecting the preamble and the post-amble to determine a position of data. Typically, the preamble and the post-amble are configured with the same length. A detection method is as follows: The base station receives a signal in a time window where the preamble/post-amble is expected to arrive, generates a local preamble/post-amble signal, and performs a sliding correlation against the received signal. A position with a largest correlation value is determined as a timing position of the preamble/post-amble.

A sampling frequency offset (Sampling frequency offset, SFO) exists between the terminal device and the network device due to differences in their sampling frequencies. The SFO causes an increase or a decrease in a length of one electrical level (or one symbol), namely, electrical level duration. Consequently, even if precise time synchronization is achieved using the preamble, the SFO can still induce a large offset at a start position of the post-amble. This requires an excessively long sliding window for detection, which in turn greatly increases computational complexity required for detection.

Therefore, a critical challenge that needs to be addressed is how to reduce the computational complexity of detection without compromising uplink synchronization performance.

## SUMMARY

This application provides a signal transmission method and a communication apparatus to reduce computational complexity of synchronization detection without compromising uplink synchronization performance.

According to a first aspect, an embodiment of this application provides a signal transmission method. The method may be performed by a terminal device, or may be performed by a component (for example, a processor, a chip, or a chip system) of the terminal device. The signal transmission method may include:

generating a first signal, where the first signal includes a first synchronization sequence, a second synchronization sequence, a synchronization sequence group, and a data sequence group, the data sequence group includes a first data sequence and a second data sequence, the synchronization sequence group includes a third synchronization sequence, a transmission time of any element in the first synchronization sequence is earlier than a transmission time of any element in any data sequence in the data sequence group, and a transmission time of any element in the second synchronization sequence is later than a transmission time of any element in any data sequence in the data sequence group;

a transmission time of any element in the first data sequence is earlier than a transmission time of any element in the second data sequence, and the third synchronization sequence exists between a transmission time of a last element in the first data sequence and a transmission time of a first element in the second data sequence, that is, the third synchronization sequence is inserted between the first data sequence and the second data sequence; and

a length of the third synchronization sequence is the same as a length of the second synchronization sequence, and a length of the first synchronization sequence is greater than the length of the third synchronization sequence; and

sending the first signal.

According to the method described in the first aspect, inserting a third synchronization sequence between data sequences enables timely correction of accumulated errors caused by an SFO, thereby improving synchronization detection performance. In addition, the second synchronization sequence placed after elements of all data sequences has the same length as the third synchronization sequence inserted between the data sequences. Both the second synchronization sequence and the third synchronization sequence are shorter than the first synchronization sequence. In other words, the length of the second synchronization sequence and the length of the third synchronization sequence that are used are reduced when compared with the length of the first synchronization sequence. This ensures that total overhead of synchronization sequences in the first signal undergoes relatively little change. Since a size of a sliding window required for detecting the second synchronization sequence and the third synchronization sequence is entirely caused by error accumulation resulting from the SFO, inserting a plurality of shorter third synchronization sequences, as opposed to using a single, longer second synchronization sequence, leads to a corresponding reduction in the sliding window size for these shorter synchronization sequences. Consequently, while keeping the total synchronization sequence overhead unchanged, the insertion of a plurality of shorter third synchronization sequences reduces computational complexity of synchronization detection.

It may be understood that a third synchronization sequence in the synchronization sequence group is inserted between any two adjacent data sequences. In other words, the data signal is temporally divided into two data sequences by a third synchronization sequence in the synchronization sequence group.

In a possible implementation, synchronization sequences included in the synchronization sequence group have the same length.

In this implementation, the length of the third synchronization sequence inserted between any two adjacent data sequences is the same, and the terminal device does not need to store the third synchronization sequences of a plurality of lengths, so that storage complexity is reduced.

In a possible implementation, a difference in length between any two data sequences in the data sequence group is less than a first threshold.

In this implementation, the difference in length between any two data sequences in the data sequence group is kept below the first threshold. This facilitates even distribution of the third synchronization sequences inserted between the data sequences. Since a sliding window for detecting a synchronization sequence is entirely caused by error accumulation resulting from an SFO, a longer intervening data sequence results in a larger sliding window for the synchronization sequence. By ensuring the difference in length between any two data sequences in the data sequence group is less than the first threshold, sizes of sliding windows for all third synchronization sequences inserted between the data sequences and those for the second synchronization sequence following all the data sequences are close. Therefore, all the third synchronization sequences in the synchronization sequence group can have the same length as the second synchronization sequence, eliminating the need for a terminal device side to store the third synchronization sequences of varying lengths, thereby reducing storage complexity.

In a possible implementation, the first threshold is 2.

In this implementation, synchronization sequences inserted between data sequences can be distributed as evenly as possible. This further allows the synchronization sequences to have the same length, eliminating the need to store third synchronization sequences of varying lengths, thereby reducing storage complexity.

In a possible implementation, a transmission time of a first element in the third synchronization sequence satisfies at least one of the following:

$$\mathrm{T} + \mathrm{round}\left(\frac{P*i}{m}\right)*T_s, \ \ \mathrm{T} + \mathrm{ceil}\left(\frac{P*i}{m}\right)*T_s, \ \mathrm{or} \ \ \mathrm{T} + \mathrm{floor}\left(\frac{P*i}{m}\right)*T_s$$

T is an end time of a last element in the first synchronization sequence, $T_s$ is a duration of each sequence element, round() represents a round-off function, ceil() represents a ceiling function, floor is a floor function, i is a positive integer ranging from 1 to m, m is a quantity of synchronization sequences in the synchronization sequence group, and P is a total length of data sequences in the data sequence group.

In this implementation, a position of the third synchronization sequence may be determined by using the foregoing formula, enabling the third synchronization sequences to be inserted as evenly as possible. This ensures that the difference in length between spaced data sequences is less than or equal to the duration of two sequence elements. Consequently, third synchronization sequences of the same length can be used, reducing computational complexity of synchronization detection.

In a possible implementation, the length M of the third synchronization sequence is $\frac{N}{2^\tau}$, N is the length of the first synchronization sequence, and $\tau$=1, 2, or 3.

In this implementation, the length of the first synchronization sequence is usually an even number or a power of 2. By determining the length of the third synchronization sequence using the foregoing formula, it can be ensured that third synchronization sequences used for synchronization and inserted between data sequences in the first signal are usually set to an even number or a power of 2.

In a possible implementation, the quantity of synchronization sequences in the synchronization sequence group is determined based on a quantity of data sequences in the data sequence group.

In this implementation, the quantity of synchronization sequences in the synchronization sequence group may be determined based on the quantity of data sequences in the data sequence group, thereby facilitating the determination of a position relationship between the synchronization sequence and the data sequence.

In a possible implementation, the quantity of synchronization sequences in the synchronization sequence group is S-1, and S is the quantity of data sequences in the data sequence group.

In this implementation, synchronization sequences and data sequences are interleaved, allowing for timely correction of accumulated errors caused by the SFO.

In a possible implementation, the method further includes:

receiving indication information from a network device, where the indication information is used to determine the quantity of data sequences in the data sequence group.

In this implementation, the quantity of data sequences may be determined based on the indication information sent by the network device. This facilitates the determination of the quantity of synchronization sequences inserted between the data sequences based on the quantity of data sequences.

According to a second aspect, an embodiment of this application provides a signal transmission method. The method may be performed by a network device, or may be performed by a component (for example, a processor, a chip, or a chip system) of the network device. The signal transmission method may include:

receiving a first signal, where the first signal includes a first synchronization sequence, a second synchronization sequence, a synchronization sequence group, and a data sequence group, the data sequence group includes a first data sequence and a second data sequence, the synchronization sequence group includes a third synchronization sequence, a transmission time of any element in the first synchronization sequence is earlier than a transmission time of any element in any data sequence in the data sequence group, and a transmission time of any element in the second synchronization sequence is later than a transmission time of any element in any data sequence in the data sequence group;

a transmission time of any element in the first data sequence is earlier than a transmission time of any element in the second data sequence, and the third synchronization sequence exists between a transmission time of a last element in the first data sequence and a transmission time of a first element in the second data sequence; and

a length of the third synchronization sequence is the same as a length of the second synchronization sequence, and a length of the first synchronization sequence is greater than the length of the third synchronization sequence; and

performing synchronization detection on the first synchronization sequence, the second synchronization sequence, and the third synchronization sequence.

In a possible implementation, a difference in length between any two data sequences in the data sequence group is less than a first threshold.

In a possible implementation, the first threshold is 2.

In a possible implementation, a transmission time of a first element in the third synchronization sequence satisfies at least one of the following:

$$\mathrm{T} + \mathrm{round}\left(\tfrac{P*i}{m}\right) * T_S, \ \ \mathrm{T} + \mathrm{ceil}\left(\tfrac{P*i}{m}\right) * T_S, \ \mathrm{or} \ \ \mathrm{T} + \mathrm{floor}\left(\tfrac{P*i}{m}\right) * T_S$$

T is an end time of a last element in the first synchronization sequence, $T_s$ is a duration of each sequence element, round() represents a round-off function, ceil() represents a ceiling function, floor is a floor function, i is a positive integer ranging from 1 to m, m is a quantity of synchronization sequences in the synchronization sequence group, and P is a total length of data sequences in the data sequence group.

In a possible implementation, the length M of the third synchronization sequence is $\frac{N}{2^\tau}$, N is the length of the first sequence, and τ=1, 2, or 3.

In a possible implementation, the quantity of synchronization sequences in the synchronization sequence group is determined based on a quantity of data sequences in the data sequence group.

In a possible implementation, the quantity of synchronization sequences in the synchronization sequence group is S-1, and S is the quantity of data sequences in the data sequence group.

In a possible implementation, the method further includes:

sending indication information, where the indication information is used to determine the quantity of data sequences in the data sequence group.

According to a third aspect, an embodiment of this application provides a communication apparatus. The communication apparatus includes:

a processing unit, configured to generate a first signal, where the first signal includes a first synchronization sequence, a second synchronization sequence, a synchronization sequence group, and a data sequence group, the data sequence group includes a first data sequence and a second data sequence, the synchronization sequence group includes a third synchronization sequence, a transmission time of any element in the first synchronization sequence is earlier than a transmission time of any element in any data sequence in the data sequence group, and a transmission time of any element in the second synchronization sequence is later than a transmission time of any element in any data sequence in the data sequence group;

a transmission time of any element in the first data sequence is earlier than a transmission time of any element in the second data sequence, and the third synchronization sequence exists between a transmission time of a last element in the first data sequence and a transmission time of a first element in the second data sequence; and

a length of the third synchronization sequence is the same as a length of the second synchronization sequence, and a length of the first synchronization sequence is greater than the length of the third synchronization sequence; and

a transceiver unit, configured to send the first signal.

According to a fourth aspect, an embodiment of this application provides a communication apparatus. The communication apparatus includes:

a transceiver unit, configured to receive a first signal, where the first signal includes a first synchronization sequence, a second synchronization sequence, a synchronization sequence group, and a data sequence group, the data sequence group includes a first data sequence and a second data sequence, the synchronization sequence group includes a third synchronization sequence, a transmission time of any element in the first synchronization sequence is earlier than a transmission time of any element in any data sequence in the data sequence group, and a transmission time of any element in the second synchronization sequence is later than a transmission time of any element in any data sequence in the data sequence group;

a transmission time of any element in the first data sequence is earlier than a transmission time of any element in the second data sequence, and the third synchronization sequence exists between a transmission time of a last element in the first data sequence and a transmission time of a first element in the second data sequence; and

a length of the third synchronization sequence is the same as a length of the second synchronization sequence, and a length of the first synchronization sequence is greater than the length of the third synchronization sequence; and

a processing unit, configured to perform synchronization detection on the first synchronization sequence, the second synchronization sequence, and the third synchronization sequence.

According to a fifth aspect, an embodiment of this application provides a communication apparatus. The communication apparatus includes a processor, configured to perform the method according to any possible implementation of the first aspect or the second aspect. Alternatively, the processor is configured to execute a program stored in a memory. When the program is executed, the method according to any possible implementation of the first aspect or the second aspect is performed.

In a possible implementation, the memory is located outside the communication apparatus.

In a possible implementation, the memory is located inside the communication apparatus.

In this embodiment of this application, the processor and the memory may alternatively be integrated into one device. In other words, the processor and the memory may alternatively be integrated together.

In a possible implementation, the communication apparatus further includes a transceiver. The transceiver is configured to receive a signal or send a signal.

According to a sixth aspect, an embodiment of this application provides a communication apparatus. The communication apparatus includes a logic circuit and an interface. The logic circuit is coupled to the interface. The interface is configured to input/output information. The logic circuit is configured to perform a processing operation.

According to a seventh aspect, an embodiment of this application provides a computer-readable storage medium. The computer-readable storage medium is configured to store a computer program. When the computer program is run on a computer, the method according to any possible implementation of the first aspect or the second aspect is performed.

According to an eighth aspect, an embodiment of this application provides a computer program product. The computer program product includes a computer program or computer code, and when the computer program product is run on a computer, the method according to any possible implementation of the first aspect or the second aspect is performed.

According to a ninth aspect, an embodiment of this application provides a computer program. When the computer program is run on a computer, the method according to any possible implementation of the first aspect or the second aspect is performed.

According to a tenth aspect, an embodiment of this application provides a wireless communication system. The wireless communication system includes a first communication apparatus and a second communication apparatus. The first communication apparatus is configured to perform the method according to any possible implementation of the first aspect, and the second communication apparatus is configured to perform the method according to any possible implementation of the second aspect.

For technical effect achieved in the second aspect to the tenth aspect, refer to the technical effect in the first aspect or beneficial effect in the following method embodiments. Details are not described herein again.

## BRIEF DESCRIPTION OF DRAWINGS

FIG. 1 is a diagram of a communication system according to an embodiment of this application;
FIG. 2 is an example of Manchester encoding according to an embodiment of this application;
FIG. 3 is a diagram of a frame structure according to an embodiment of this application;
FIG. 4 is an example of an SFO according to an embodiment of this application;
FIG. 5 is a schematic flowchart of a signal transmission method according to an embodiment of this application;
FIG. 6 is a diagram of a position of a synchronization sequence according to an embodiment of this application;
FIG. 7 is another diagram of a position of a synchronization sequence according to an embodiment of this application;
FIG. 8 is a diagram of a sliding window according to an embodiment of this application;
FIG. 9 is a diagram of simulation of demodulation performance according to an embodiment of this application;
FIG. 10 is a diagram of a structure of a communication apparatus according to an embodiment of this application;
FIG. 11 is a diagram of a structure of another communication apparatus according to an embodiment of this application; and
FIG. 12 is a diagram of a structure of still another communication apparatus according to an embodiment of this application.

## DESCRIPTION OF EMBODIMENTS

To make the objectives, technical solutions, and advantages of this application clearer, the following further describes this application with reference to the accompanying drawings.

Terms "first", "second", and the like in the specification, claims, and accompanying drawings of this application are merely intended to distinguish between different objects, but do not indicate a particular order. In addition, terms "include" and "have" and any other variants thereof are intended to cover non-exclusive inclusion. For example, processes, methods, systems, products, devices, or the like that include a series of steps or units are not limited to listed steps or units, but optionally further include steps, units, or the like that are not listed, or optionally further include other steps or units inherent to the processes, methods, products, devices, or the like.

An "embodiment" mentioned in the specification indicates that a particular feature, structure, or characteristic described with reference to this embodiment may be included in at least one embodiment of this application. The phrase shown in various locations in this specification may not necessarily refer to a same embodiment, and is not an independent or optional embodiment exclusive from another embodiment. It may be explicitly and implicitly understood by a person skilled in the art that embodiments described in the specification may be combined with another embodiment.

In this application, "at least one (item)" means one or more, "a plurality of" means two or more, and "at least two (items)" means two or three or more. The term "and/or" describes an association relationship between associated objects, and indicates that three relationships may exist. For example, "A and/or B" may represent the following three cases: Only A exists, only B exists, and both A and B exist, where A and B may be singular or plural. The character "/" generally indicates an "or" relationship between associated objects. "At least one of the following items" or a similar expression thereof means any combination of these items. For example, at least one of a, b, or c may represent: a, b, c, a and b, a and c, b and c, or a, b, and c.

This application may be applied to protocol frameworks of a plurality of wireless communication systems. The wireless communication system may include but is not limited to a long term evolution (long term evolution, LTE) system, a new radio access technology (new radio access technology, NR) system, a future evolved communication system, and the like. The future evolved communication system is, for example, a future network or a 6th generation communication system.

This application may be further applied to the Internet of Things (Internet of Things, IoT), for example, applied to passive IoT or semi-passive IoT. The passive IoT or semi-passive IoT is a low-cost and low-power Internet of Things solution, and may be widely applied to automatic warehousing, a sensor, and a positioning scenario. In the passive IoT, a terminal device may be referred to as a label. Due to constraints of power consumption and costs, the label cannot independently generate a carrier. Energy of the label is obtained by collecting energy of the carrier sent by the network device. Therefore, during signal transmission, the network device needs to first send a single frequency signal (a monophonic signal) that does not carry any information to transmit energy to the label. When the energy of the carrier is greater than a threshold, the label is activated. During uplink transmission, a label of the passive IoT can transmit uplink information only in a backscatter (backscatter) manner. Backscatter means that the label directly modulates a received carrier and then reflects the modulated carrier back. Due to constraints of power consumption and costs, modulation is usually on-off keying (on-off keying, OOK) modulation. OOK modulation represents 1 and 0 by sending and not sending a signal. Within one electrical level time, if a signal amplitude is 0, that is, the signal is not sent, it indicates that 0 is transmitted; and if a signal amplitude is not 0, it indicates that 1 is transmitted.

This application may be applied to a plurality of mobile communication scenarios of the foregoing wireless communication system, for example, uplink/downlink transmission between a network device and a terminal device or point-to-point transmission between terminal devices, multi-hop/relay transmission between a network device and a terminal device, and dual connectivity (dual connectivity, DC) or multi-connectivity between a plurality of network devices and a terminal device.

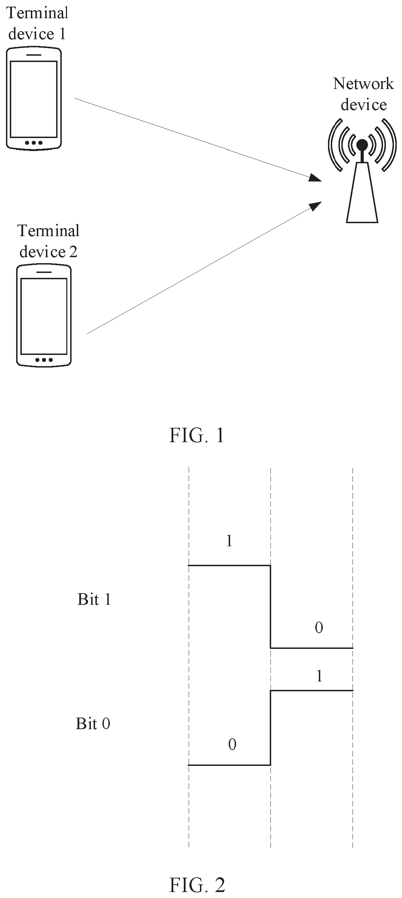

FIG. 1 is a diagram of a system architecture of a communication system according to this application. It may be understood that FIG. 1 is merely an example, and does not impose a limitation on a network architecture applicable to this application. In addition, transmission such as uplink transmission, downlink transmission, access link transmission, backhaul (backhaul) link transmission, and sidelink (sidelink) transmission is not limited in this application.

FIG. 1 is a diagram of a network architecture to which an embodiment of this application is applied. The network architecture shown in FIG. 1 includes a network device, a terminal device 1, and a terminal device 2. There may be one or more network devices, and there may be one or more terminal devices.

It may be understood that a quantity and a form of devices shown in FIG. 1 are used as an example, and do not constitute a limitation on embodiments of this application. For example, during actual application, two or more network devices may be included.

In embodiments of this application, the network device is an apparatus that is deployed in a radio access network and that provides a wireless communication function for the terminal device. The network device may include various forms of macro base stations, micro base stations (also referred to as small cells), relay stations, access points, and the like. In systems using different radio access technologies, names of the network device may be different, for example, an eNB or an eNodeB (evolved NodeB) in LTE (long term evolution, long term evolution). Alternatively, the network device may be a radio controller in a cloud radio access network (cloud radio access network, CRAN) scenario. Alternatively, the network device may be a base station device in a 5G network or a network device in a future evolved network. Alternatively, the network device may be a wearable device or a vehicle-mounted device. Alternatively, the network device may be a transmission and reception point (transmission and reception point, TRP). Alternatively, the network device may be a general term for all devices at a network end. For example, when a plurality of TRPs are used to transmit data to the terminal device, the plurality of TRPs are collectively referred to as a network device. Alternatively, the network device may be an access network device or a module of an access network device in an open access network (open RAN, ORAN) system. The network device may be a module or a unit that can implement a part of functions of the base station. For example, the network device may be a central unit (central unit, CU), a distributed unit (distributed unit, DU), a CU-control plane (control plane, CP), a CU-user plane (user plane, UP), or a radio unit (radio unit, RU). In the ORAN system, the CU may also be referred to as an O-CU, the DU may also be referred to as an open (open, O)-DU, the CU-CP may also be referred to as an O-CU-CP, the CU-UP may also be referred to as an O-CUP-UP, and the RU may also be referred to as an O-RU.

In embodiments of this application, the terminal device is a device having a wireless transceiver function, and is also referred to as user equipment (user equipment, UE), a mobile station (mobile station, MS), a mobile terminal (mobile terminal, MT), or the like. The terminal device is a device that provides a user with voice and/or data connectivity, and also includes a device that can perform sidelink communication, for example, an in-vehicle terminal, or a handheld terminal that can perform V2X communication. The terminal device may be deployed on land, including an indoor, outdoor, handheld, wearable, or in-vehicle device; or may be deployed on water (for example, on a ship); or may be deployed in the air (for example, on a plane, a balloon, or a satellite). The terminal device may be a mobile phone (mobile phone), a tablet computer (Pad), a computer having a wireless transceiver function, a virtual reality (virtual reality, VR) terminal device, an augmented reality (augmented reality, AR) terminal device, a wireless terminal in industrial control (industrial control), an in-vehicle terminal device, a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a wearable terminal device, an extended reality (extended reality, XR) device, or the like. An application scenario is not limited in embodiments of this application. The terminal device sometimes may also be referred to as a terminal, user equipment (user equipment, UE), an access terminal device, an in-vehicle terminal, an industrial control terminal, a UE unit, a UE station, a mobile station, a mobile console, a remote station, a remote terminal device, a mobile device, a UE agent, a UE apparatus, or the like. The terminal device may be fixed or mobile. In the passive IoT, the terminal device may also be a label.

The network architecture and a service scenario described in embodiments of this application are intended to describe the technical solutions in embodiments of this application more clearly, and do not constitute a limitation on the technical solutions provided in embodiments of this application. A person of ordinary skill in the art may know that: With evolution of the network architecture and emergence of new service scenarios, the technical solutions provided in embodiments of this application are also applicable to similar technical problems.

Before the method in this application is described in detail, some concepts in this application are first briefly described.

1. SFO

SFO means a sampling frequency error in the unit of ppm, and ppm means parts per million. If a reference sampling frequency is 180 kHz, 180k points are sampled within 1s. If the SFO is 200 ppm, a quantity of sampling points within 1s may be $180k*(1+200*10^{-6})=180036$, or the quantity of sampling points within 1s may be $180k*(1-200*10^{-6})$ $=179964$, and a symbol period error is $36/180k=200$ ppm. Existence of the SFO causes an increase or a decrease (symbol period error) in a duration of one electrical level (or referred to as one element or one symbol), affecting synchronization performance. For ease of description, in this application, an error caused by a sampling frequency error is referred to as a symbol error.

For example, a sampling frequency of the network device may be a reference sampling frequency, and a sampling frequency of the terminal device may be less than or greater than the reference sampling frequency of the network device. If the sampling frequency of the terminal device is less than the reference sampling frequency of the network device, the duration of sending one electrical level by the terminal device is greater than the reference duration of one electrical level. If the sampling frequency of the terminal device is greater than the reference sampling frequency of the network device, the duration of sending one electrical level by the terminal device is less than the reference duration of one electrical level.

2. Electrical level (chip)

During uplink transmission, a 0/1 signal may be sent by using a square wave. A high electrical level indicates bit 1, and a low electrical level indicates 0.

3. Manchester (Manchester) encoding

Manchester encoding is a common line code. A specific encoding manner is shown in FIG. 2. One high electrical level and one low electrical level may represent bit 1, and one low electrical level and one high electrical level may represent bit 0.

4. Preamble (preamble) and post-amble (post-amble)

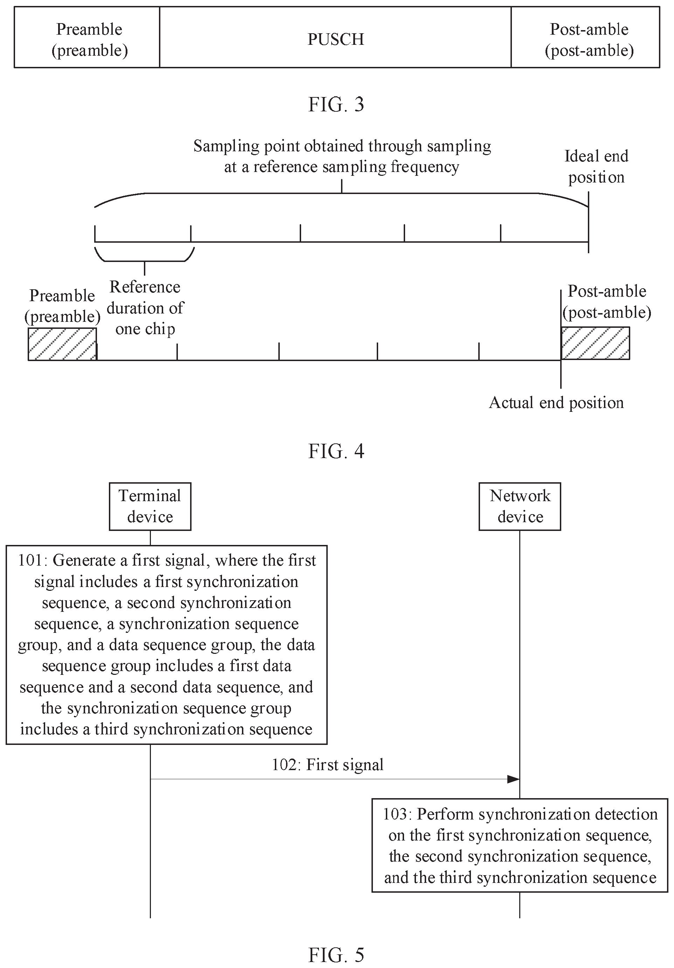

When transmitting uplink data, a terminal device prepends a preamble (preamble) to and appends a post-amble (post-amble) to a data signal. The data signal may be carried in a physical uplink shared channel (physical uplink shared channel, PUSCH). FIG. 3 is a diagram of a frame structure. A network device detects a position of the preamble (preamble) to determine a start position of the data signal. The network device detects a position of the post-amble (post-amble) to determine an end position of the data signal. Currently, a length of the preamble (preamble) is the same as a length of the post-amble (post-amble).

In some scenarios, the frame structure transmitted by the terminal device may alternatively include only the preamble (preamble) and the data signal. For example, two types of labels, namely, a Type A and a Type B, are defined in a radio frequency identification (radio frequency identification, RFID) standard (ISO/IEC 18000-6 2004) of passive IoT. A type A uplink frame structure includes the preamble and the data signal. A preamble sequence is [0 0 0 0 0 1 0 1 0 1 0 1 0 1 0 1 0 1 0 0 0 1 1 0 1 1 0 0 0 1], and OOK modulation is performed on the preamble sequence to form a preamble signal. A Type B downlink frame structure includes the preamble and the data signal. The preamble is [0 1 0 1 0 1 0 1 0 1 0 1 0 1 0 1], and OOK modulation is performed on the preamble to form the preamble signal.

5. Synchronization detection method

Synchronization detection is performed on the preamble and the post-amble to determine their respective positions. The position of the preamble (preamble) is detected to determine the start position of the data signal. A receive end may further determine that a residual SFO is not greater than 2% after estimating and compensating for the SFO based on the preamble.

This residual SFO causes an actual end position of the data signal h to drift from its ideal end position, which may be understood as a data signal end position determined through sampling at a reference sampling frequency. Taking FIG. 4 as an example, a sampling point is obtained through sampling at the reference sampling frequency. Correspondingly, a duration of one electrical level is the reference duration, and an obtained end position of the data signal is the ideal end position. Because of the SFO, the actual duration of an electrical level is, for example, shorter than the reference duration. In FIG. 4, the actual end position of the data signal is before the ideal end position. To determine the actual end position, the receive end needs to detect the position of the post-amble.

The following uses an example in which synchronization detection is performed on the position of the post-amble. The method for synchronization detection on the position of the preamble can be deduced by analogy. The receive end generates a local post-amble, receives a signal in a sliding window where the post-amble is expected to arrive, and performs a sliding correlation between the local post-amble signal and the signal received in the sliding window. A position with a largest correlation value is determined as a start position of the post-amble. It is assumed that a signal obtained through OOK modulation is $r_i$, $r_i \in \{0,1\}$, and both the received signal and the local signal may be converted into a binary phase signal (for example, $y_i = 1\text{-}2 * r_i$) and before performing a correlation operation. A length of the sliding window needs to include all possible start positions of the post-amble. For example, the sliding window can be centered around the ideal end position within an offset of $xP$, where $x$ is a largest value of an estimated residual SFO, and $P$ is a total quantity of electrical levels included in the data signal. The size of the sliding window is then $2xP$. For example, it is considered that a quantity of data bits carried in the PUSCH is 800. If a transmit end uses 1/3 convolutional coding and Manchester encoding, the total quantity of electrical levels is 4800. With an SFO not greater than 2%, when the receive end performs time synchronization on the post-amble, the size of the sliding window is 4800*2%*2=192 chips. This demonstrates that the size of the sliding window is determined by a quantity of data electrical levels. An excessively large sliding window of the post-amble not only degrades synchronization performance but also increases computational complexity of synchronization detection. The method for synchronous position detection method on the preamble is similar to that for the post-amble. However, the size of the sliding window does not depend on the SFO, but is determined by factors such as a processing delay of the terminal device and a channel propagation delay.

In this embodiment of this application, both a synchronization sequence and a data sequence include one or more elements, and one element may be one bit. For example, one element is one bit before Manchester encoding. Alternatively, one element may be one electrical level. For example, one element may be one electrical level after Manchester encoding. In this embodiment of this application, one element may correspond to one or more electrical levels. For example, if one element is one bit before Manchester encoding, and an electrical level after Manchester encoding is not repeated, one bit corresponds to two electrical levels. For another example, if one element is one electrical level after Manchester encoding, and one electrical level after Manchester encoding is repeated four times, one element corresponds to four electrical levels. Whether one electrical level after Manchester encoding is repeated and a quantity of repetition times may be configured by the network device.

A transmission time of one element may be understood as a transmission time of one or more electrical levels that correspond to the element. A duration of one element may be understood as a duration of one or more electrical levels that correspond to the element. A length of a sequence in this embodiment of this application may be a duration of sending all elements included in the sequence, or may be a quantity of elements included in the sequence.

The following describes embodiments of the signal transmission method in this application by using examples. It should be noted that technical solutions (or referred to as embodiments) of this application may be independently implemented or may be implemented in combination based on some internal relationships. This is not limited in this application. In addition, various terms and definitions in embodiments may be mutually referenced. In each embodiment of this application, different implementations may be implemented in combination or may be independently implemented.

FIG. 5 is a schematic flowchart of a signal transmission method according to an embodiment of this application. FIG. 1 may be a diagram of a system architecture to which the signal transmission method is applicable. As shown in FIG. 5, the method may include 101 to 103. An execution sequence of the steps is not limited in this embodiment of this application. As shown in FIG. 5, the signal transmission method in this embodiment of this application includes but is not limited to the following steps. It may be understood that in some scenarios, a part of rather than all of the following step 101 to step 103 may be included. This is not limited in this application.

101: A terminal device generates a first signal, where the first signal includes a first synchronization sequence, a second synchronization sequence, a synchronization sequence group, and a data sequence group, the data sequence group includes a first data sequence and a second data sequence, and the synchronization sequence group includes a third synchronization sequence.

A transmission time of any element in the first synchronization sequence is earlier than a transmission time of any element in any data sequence in the data sequence group, and a transmission time of any element in the second synchronization sequence is later than a transmission time of any element in any data sequence in the data sequence group.

A transmission time of any element in the first data sequence is earlier than a transmission time of any element in the second data sequence, and the third synchronization sequence exists between a transmission time of a last element in the first data sequence and a transmission time of a first element in the second data sequence.

A length of the third synchronization sequence is the same as a length of the second synchronization sequence, and a length of the first synchronization sequence is greater than the length of the third synchronization sequence.

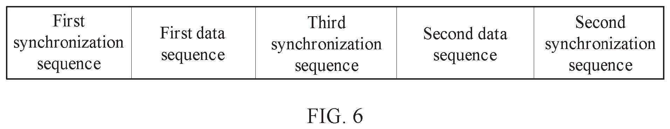

The data sequence group may include at least two data sequences. In some implementations, the at least two data sequences may be data sequences obtained by dividing one to-be-sent data sequence (the to-be-sent data sequence may also be referred to as a to-be-sent data signal). For example, one to-be-sent data sequence includes 2000 elements, and the to-be-sent data sequence may be divided into four data sequences. Each data sequence includes 500 elements. A 1st data sequence includes a 1st element to a 500th element, a 2nd data sequence includes a 501st element to a 1000th element, a 3rd data sequence includes a 1001st element to a 1500th element, and a 4th data sequence includes a 1501st element to a 2000th element. It may be understood that equal division is used as an example herein. For ease of description, in this application, two adjacent data sequences in the data sequence group are respectively referred to as the first data sequence and the second data sequence. That the transmission time of any element in the first data sequence is before the transmission time of the first element in the second data sequence means that the first data sequence is before the second data sequence. FIG. 6 is a diagram of the first data sequence and the second data sequence.

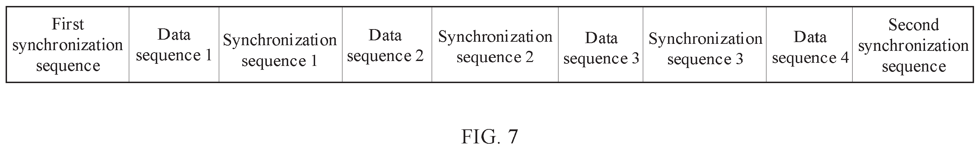

The synchronization sequence group includes one or more synchronization sequences. For ease of description, in this application, the one or more synchronization sequences included in the synchronization sequence group are referred to as one or more third synchronization sequences. The third synchronization sequence in the synchronization sequence group is a synchronization sequence inserted between data sequences, and is used to correct an accumulated symbol error in a timely manner. As shown in FIG. 7, a synchronization sequence 1, a synchronization sequence 2, and a synchronization sequence 3 may be understood as the third synchronization sequences in the synchronization sequence group. For example, the third synchronization sequence in the synchronization sequence group may be referred to as a mid-amble.

The first synchronization sequence may be a preamble (preamble), a transmission time of the first synchronization sequence is before the transmission time of any element in any data sequence in the data sequence group, and the first synchronization sequence is used to determine a start position of the 1st data sequence in the data sequence group. The second synchronization sequence may be a post-amble (post-amble), a transmission time of the second synchronization sequence is after the transmission time of any element in any data sequence in the data sequence group, and the second synchronization sequence is used to determine an end position of a last data sequence in the data sequence group. FIG. 6 and FIG. 7 are diagrams of positions of the first synchronization sequence and the second synchronization sequence.

In an example, the data sequence group may include two data sequences. For example, the two data sequences are respectively the first data sequence and the second data sequence, and the synchronization sequence group may include one third synchronization sequence. The third synchronization sequence exists after the transmission time of the last element in the first data sequence and before the transmission time of the first element in the second data sequence, and the third synchronization sequence is inserted between the first data sequence and the second data sequence. FIG. 6 is a diagram of positions of the first data sequence, the third synchronization sequence, and the second data sequence.

In another example, the data sequence group includes more than two data sequences, and the synchronization sequence group includes more than one third synchronization sequence. The first data sequence and the second data sequence in this embodiment of this application may be any two data sequences in the data sequence group. The third synchronization sequence exists between the transmission time of the last element in the first data sequence and the transmission time of the first element in the second data sequence. In other words, the third synchronization sequence in the synchronization sequence group exists between any two data sequences.

FIG. 7 is a diagram of arrangement of a data sequence and a synchronization sequence. The synchronization sequence 1, the synchronization sequence 2, and the synchronization sequence 3 may be understood as three third synchronization sequences in the synchronization sequence group, and a data sequence 1, a data sequence 2, a data sequence 3, and a data sequence 4 may be understood as a plurality of data sequences in the data sequence group. One or more third synchronization sequences exist between any two data sequences.

The data sequences in the data sequence group may be sequentially arranged in ascending order of sequence index values of the data sequences. If the first data sequence and the second data sequence are two data sequences whose sequence index values are consecutive, it may be understood that the first data sequence and the second data sequence are two adjacent data sequences, and one third synchronization sequence in the synchronization sequence group exists between the transmission time of the last element in the first data sequence and the transmission time of the first element in the second data sequence. In other words, one third synchronization sequence in the synchronization sequence group is inserted every other data sequence until the second synchronization sequence is inserted after the last data sequence.

For example, as shown in FIG. 7, if the first data sequence is the data sequence 1, and the second data sequence is the data sequence 2, one synchronization sequence 1 exists between the two data sequences. If the first data sequence and the second data sequence are two data sequences whose sequence index values are inconsecutive, at least two third synchronization sequences may exist between the transmission time of the last element in the first data sequence and the transmission time of the first element in the second data sequence. Further, a data sequence may exist. For example, as shown in FIG. 7, if the first data sequence is the data sequence 1, and the second data sequence is the data sequence 3, the synchronization sequence 1 and the synchronization sequence 2 exist between the data sequence 1 and the data sequence 3. Further, the data sequence 2 exists.

In some implementations, the length of the third synchronization sequence (namely, the mid-amble) is the same as the length of the second synchronization sequence (namely, the post-amble). For example, both the length of the third synchronization sequence and the length of the second synchronization sequence are M. The length of the first synchronization sequence (namely, the preamble) is greater than the length of the third synchronization sequence. Certainly, the length of the first synchronization sequence is also greater than the length of the second synchronization sequence. For example, the length of the first synchronization sequence is N, M<N, and M and N are positive integers.

For example, the length M of the third synchronization $\text{sequence} = \frac{N}{2^\tau}$, N is the length of the first sequence, and $\tau$=1, 2, or 3.

In this embodiment of this application, both the third synchronization sequence and the second synchronization sequence are shorter than the first synchronization sequence. A sliding window for a network device to perform synchronization detection on the third synchronization sequence and the second synchronization sequence is smaller than a sliding window of the first synchronization sequence. This embodiment of this application is different from a manner in which the post-amble has the same length as the first synchronization sequence in that a plurality of short sequences are inserted to replace an existing longer post-amble, so that complexity of synchronization detection can be reduced.

In some implementations, a difference in length between any two data sequences in the data sequence group is less than a first threshold. For example, the first threshold is 2. The difference in length between any two data sequences in the data sequence group is kept below the first threshold. This facilitates even distribution of the third synchronization sequences. A sliding window of the synchronization sequence depends on symbol error accumulation caused by an SFO. A longer data sequence indicates a larger sliding window of the synchronization sequence. To ensure synchronization performance, a longer synchronization sequence needs to be inserted after the data sequence. In this embodiment of this application, lengths of data sequences are kept as uniform as possible, so that lengths of synchronization sequences (including the third synchronization sequence and the second synchronization sequence) inserted after the data sequences can be kept consistent. In this way, the terminal device needs to store only the third synchronization sequence and the second synchronization sequence that are of a same length, thereby reducing storage complexity of the terminal device.

The following describes a position of the third synchronization sequence by using an example. A transmission time of a first element in each third synchronization sequence satisfies at least one of the following:

$$\text{Ti} = \text{T} + \text{round}\left(\frac{P*i}{m}\right)*T_s, \ \ \text{Ti} = \text{T} + \text{ceil}\left(\frac{P*i}{m}\right)*T_s, \text{ or } \text{Ti} = \text{T} + \text{floor}\left(\frac{P*i}{m}\right)*T_s.$$

Ti is a transmission time of a first element in an ith third synchronization sequence. T is an end time of a last element in the first synchronization sequence, $T_s$ is a duration of each sequence element, round() represents a round-off function, ceil() represents a ceiling function, floor is a floor function, i is a positive integer ranging from 1 to m, m is a quantity of synchronization sequences in the synchronization sequence group, namely, a total quantity of inserted third synchronization sequences, and P is a total length of data sequences in the data sequence group.

FIG. 7 is used as an example. A value of i is 1, and Ti represents a transmission time of a first element in the synchronization sequence 1; a value of i is 2, and Ti represents a transmission time of a first element in the synchronization sequence 2; and a value of i is 3, and Ti represents a transmission time of a first element in the synchronization sequence 3.

For example, $\text{Ti} = \text{T} + \text{round}\left(\frac{P*i}{m}\right)*T_s$. If P=2000 and m=3, the transmission time of the first element in the synchronization sequence 1 T1 = T + 667 * $T_s$, synchronization sequence 2 T2 = T + 1333 * $T_s$, and the transmission time of the first element in the synchronization sequence 3 T3 = T + 2000 * $T_s$. For another example, if P=4800 and m=3, the transmission time of the first element in the synchronization sequence 1 T1 = T + 1600 * $T_s$, the transmission time of the first element in the synchronization sequence 2 T2 = T + 3200 * $T_s$, and the transmission time of the first element in the synchronization sequence 3 T3 = T + 4800 * $T_s$.

The quantity of third synchronization sequences in the synchronization sequence group is determined based on a quantity of data sequences in the data sequence group. The third synchronization sequence in the synchronization sequence group is a synchronization sequence inserted between two data sequences in the first signal. The quantity of third synchronization sequences in the synchronization sequence group is S-1, and S is the quantity of data sequences in the data sequence group. As shown in FIG. 7, the quantity of data sequences in the data sequence group is 4, and the quantity of third synchronization sequences in the synchronization sequence group is 3.

The quantity of data sequences in the data sequence group may be configured by the network device, or the network device sends indication information to the terminal device, and the terminal device may determine the quantity of data sequences in the data sequence group based on the indication information. For example, the indication information may indicate a parameter, and the terminal device may determine the quantity of data sequences in the data sequence group based on the parameter. For example, the parameter may be an initialized length of the data sequence, or may be understood as an initialized period of inserting the third synchronization sequence. For example, if one third synchronization sequence is inserted every K elements in a to-be-sent data sequence, the quantity of data sequences in the data sequence group is $\left\lceil \dfrac{P}{K} \right\rceil$ , and P is a length of the to-be-sent data sequence, namely, the foregoing total length of data sequences in the data sequence group. ⌈ ⌉ is for rounding up. The indication information may be carried in media access control (Medium Access Control, MAC) layer signaling, or may be implicitly indicated by using a downlink preamble (preamble) of a physical layer.

The terminal device performs OOK modulation on the first synchronization sequence, the second synchronization sequence, the synchronization sequence in the synchronization sequence group, and the data sequence in the data sequence group, to generate the first signal.

102: The terminal device sends the first signal to the network device. Correspondingly, the network device receives the first signal.

103: The network device performs synchronization detection on the first synchronization sequence, the second synchronization sequence, and the third synchronization sequence.

The network device receives the first signal, performs synchronization detection on the first synchronization sequence (namely, the preamble), determines an end position of the first synchronization sequence in the first signal, and determines a largest value of a residual SFO after estimating and compensating the SFO based on the first synchronization sequence (namely, the preamble). For example, the residual SFO is less than or equal to 2%.

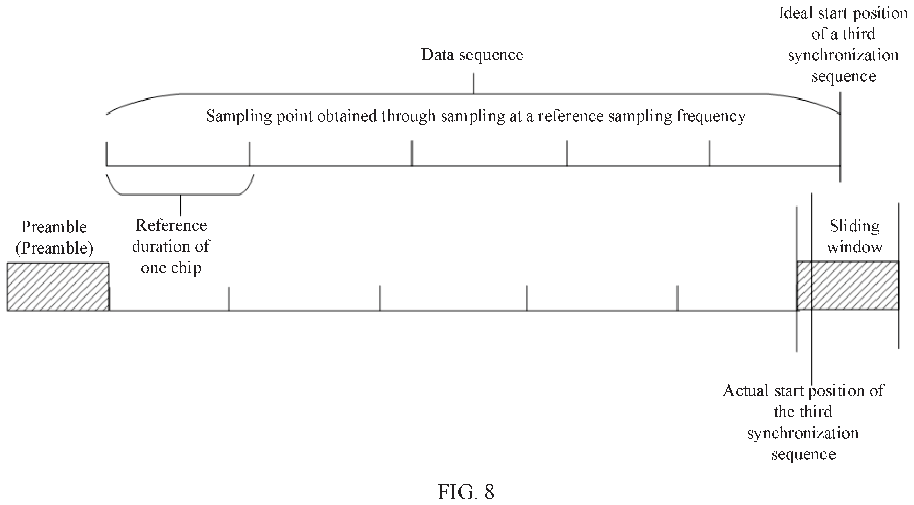

The network device determines a start position and an end position of a sliding window of the third synchronization sequence based on SFO information and the end position of the first synchronization sequence. A manner of determining the sliding window is described below by using an example with reference to FIG. 8. The start position of the sliding window is offset forward by $x * P1$ from an ideal start position of the third synchronization sequence, where $x$ is the largest value of the residual SFO, and $P1$ is a length of a data sequence before the third synchronization sequence shown in the figure. The end position of the sliding window is offset backward by $x * P1$ from the ideal start position of the third synchronization sequence. In other words, a length of one sliding window is $2 * x * P1$. The ideal start position of the third synchronization sequence is obtained through sampling at a reference sampling frequency.

The network device performs sliding correlation between a received signal in the sliding window and a locally generated third synchronization sequence, and determines a position with a largest correlation value as an actual start position of the third synchronization sequence. Similarly, the network device performs synchronization detection on the second synchronization sequence, to determine an actual start position of the second synchronization sequence.

In a possible implementation, synchronization detection is performed on each synchronization sequence in the synchronization sequence group in parallel. In another possible implementation, the network device may perform synchronization detection on each synchronization sequence in the synchronization sequence group in serial, and update a start position and an end position of a sliding window of a next synchronization sequence based on a position of a previous synchronization sequence.

After determining a position of each third synchronization sequence in the synchronization sequence group, the network device may obtain a data window, namely, a start position and an end position of a data signal, and demodulate and decode the data signal that is in the data window and that carries the data sequence.

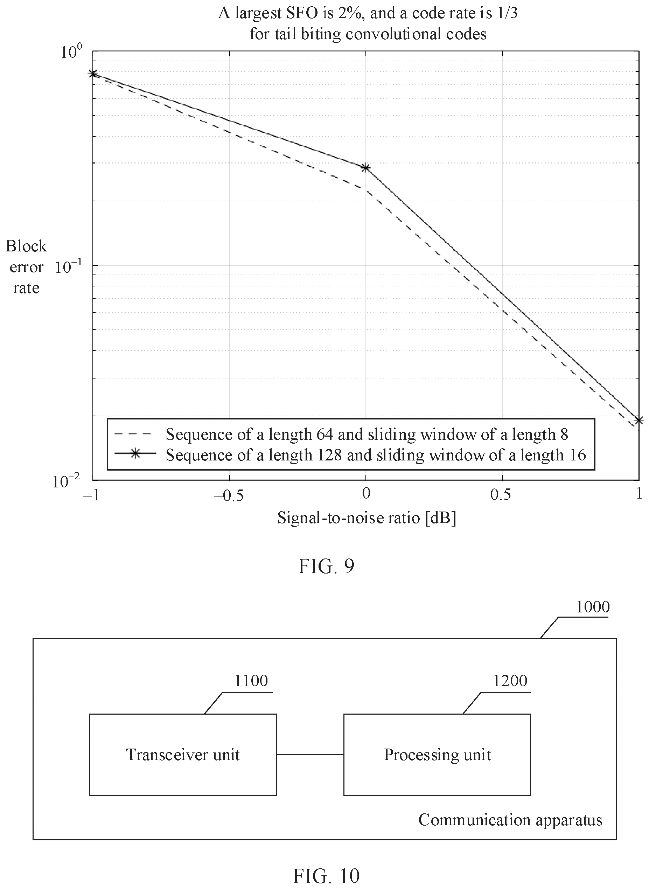

In this embodiment of this application, a size of the sliding window of the third synchronization sequence is determined by symbol error accumulation caused by an SFO of a data sequence before the third synchronization sequence. When overheads of synchronization sequences are the same, an excessively large sliding window causes a loss of synchronization performance. As shown in FIG. 9, when a largest value of the residual SFO is 2%, data bits are encoded by using 1/3 tail-biting convolutional codes (Tail-biting Convolutional Codes, TBCC). A solid line in a simulation diagram indicates a relationship between a block error rate and a signal-to-noise ratio when a sequence with a length of 128 is used for timing synchronization and a sliding window is 16. A dashed line in a simulation diagram indicates a relationship between the block error rate and the signal-to-noise ratio when two sequences with a length of 64 are used to replace the sequence with a length of 128 and the sliding window is 8. It can be learned from FIG. 9 that when the sliding window is excessively large, data demodulation performance slightly deteriorates. Therefore, in this application, short synchronization sequences are uniformly inserted, so that a size of a sliding window for each synchronization detection can be reduced, and synchronization performance is improved. In addition, in this application, short synchronization sequences are uniformly inserted, so that a sliding window is reduced during synchronization detection, and computational complexity is reduced. For example, in a sequence insertion manner in FIG. 3, a sequence length of a post-amble is N, and a sliding window is L. If two short sequences whose lengths are both N/2 are used to replace the original post-amble, one short sequence is inserted between two adjacent data sequences, and one short sequence is used as a post-amble, the sliding window each changes to L/2. The computational complexity is reduced by 50%. If K short synchronization sequences are used to replace the original post-amble whose length is equal to the preamble, complexity is reduced to 1/K of original complexity.

In addition, computational complexity of non-uniform insertion is higher than that of uniform insertion. An example in which the two short sequences are used to replace the original post-amble is still used. Assuming that a length of one short sequence is a, a size of a corresponding sliding window is $\frac{a}{N}*L$, a length of the other short sequence is N-a, a size of a corresponding sliding window is $\frac{N-a}{N}*L$, and total computational complexity is $\frac{a^2+(N-a)^2}{N}*L$. It can be found that computational complexity is the lowest when a $a=\frac{N}{2}$, that is, when uniform insertion is performed.

The following uses an example in which the third synchronization sequence in the synchronization sequence group is a mid-amble to describe a method for determining a transmission time of a first element in each mid-amble by the terminal device. Mid-ambles in the synchronization sequence group have the same length, for example, M, and a length of a post-amble (namely, the second synchronization sequence in the foregoing embodiment) is also equal to M. Mid-ambles with the length of M are uniformly inserted into a to-be-sent data sequence to correct an accumulated symbol error in a timely manner. For example, a length of the to-be-sent data sequence is P electrical levels. In this embodiment, an example in which a sequence element is an electrical level is used, and a largest value of a residual SFO after preamble estimation is x. A manner of determining an insertion position of the mid-amble is as follows:

Step 1: Initialize a mid-amble insertion period to K, that is, insert one mid-amble sequence whose length is M every K electrical levels, where K is an integer greater than or equal to 1.

In some implementations, a value of K may be related to a size of an SFO and/or a capability of the terminal device. The terminal device in this embodiment of this application may be a label in passive IoT or semi-passive IoT. For example, long-term statistics may be used to obtain max(SFO). The value of K is related to a value of M. A larger value of K indicates a larger value of M, and correspondingly, indicates a larger sliding window during synchronization detection. In some implementations, when x*P is fixed, a larger K may indicate a larger M, to ensure synchronization performance, where x is the largest value of the SFO, and P is the length of the to-be-sent data sequence.

In an example, the value of K may be configured by the network device. For example, the network device indicates the value of K by using the indication information, or implicitly indicates the value of K by using a downlink preamble. For example, the value of M may also be configured by the network device.

Step 2: Determine that a quantity m of mid-ambles that need to be inserted is $\left\lceil \frac{P}{K} \right\rceil - 1$, where P is the length of the to-be-sent data sequence, and K is the initialized insertion period of the mid-amble.

Alternatively, in step 2, it may be first determined that a quantity s of data sequences into which the to-be-sent data sequence is divided is $\left\lceil \frac{P}{K} \right\rceil$, and then the quantity m of mid-ambles is determined based on the quantity of data sequences obtained through division, where the quantity m of mid-ambles is s - 1.

In some implementations, $\frac{xP}{s} \leq M$, where x is the largest value of the residual SFO, M is the length of mid-amble, s is the quantity of data sequences, and P is the length of the to-be-sent data sequence. $\frac{xP}{s} \leq M$ indicates that half of a size of a sliding window corresponding to each mid-amble should not be greater than the length of the mid-amble; otherwise, synchronization is difficult.

An example in which P=2000 and K=1000 is used. The quantity of data sequences obtained through division $\left\lceil \frac{P}{K} \right\rceil = 2$, and the quantity of mid-ambles that need to be inserted is 1. If P=2000 and K=600, the quantity of data sequences obtained through division $\left\lceil \frac{P}{K} \right\rceil = 4$, and the quantity of mid-ambles that need to be inserted is 3. One mid-amble with the length of M is inserted every K electrical levels, and the post-amble is inserted after a last data sequence. In this case, when P=2000, K=600, and SFO=2%, a sliding window of first three mid-ambles is 600*2*2%=24, and a sliding window of a last post-amble is 200*2*2%=16. Therefore, a length of the last post-amble needs to be redesigned. In addition, the length is related to a quantity of electrical levels included in the data sequence before the post-amble, and design complexity is high. The terminal device needs to store synchronization sequences of a plurality of lengths, and storage complexity is increased. In addition, computational complexity of non-uniform insertion is also high. For details, refer to related descriptions of "computational complexity of non-uniform insertion is higher than that for uniform insertion" described in the foregoing embodiment. To resolve these technical problems, in this embodiment of this application, a position of the mid-amble may be determined in a manner of step 3, to implement uniform insertion of the mid-amble and the post-amble.

Step 3: A transmission time of a first element in an $i^{th}$ mid-amble satisfies at least one of the following:

$$\text{Ti} = \text{T} + \text{round}\left(\frac{P*i}{m}\right) * T_s, \ \text{Ti} = \text{T} + \text{ceil}\left(\frac{P*i}{m}\right) * T_s \ \text{or or} \ \text{Ti} = \text{T} + \text{floor}\left(\frac{P*i}{m}\right) * T_s \ .$$

Ti is the transmission time of the first element in the $i^{th}$ mid-amble, T is an end time of a last element in the preamble, $T_s$ is a duration of each sequence element, round() represents a round-off function, ceil() represents a ceiling function, floor is a floor function, i is a positive integer ranging from 1 to m, m is the quantity of mid-ambles, and P is the length of the to-be-sent data sequence.

In this manner, because a difference in length between the last data sequence and a previous data sequence is small, the length of the post-amble may be consistent with the length of the mid-amble, to reduce storage complexity of the terminal device. In addition, because insertion is performed uniformly, computational complexity can be reduced.

In this embodiment of this application, sliding windows of the mid-amble and the post-amble are caused by symbol error accumulation caused by the SFO. For example, if a quantity of data bits carried in a physical uplink shared channel (Physical Uplink Shared Channel, PUSCH) is 800, after 1/3 convolutional encoding and Manchester encoding are performed, a total length of the to-be-sent data sequence is $800 \div 1/3*2 = 4800$, and there are 4800 electrical levels in total. If the largest value of the SFO is 2%, and if the frame structure shown in FIG. 3 is used, the start position of the post-amble is offset by $\pm 4800*2\% = \pm 96$ electrical levels. When the receive end performs time synchronization on the post-amble, a size of a sliding window is 192 electrical levels. If the mid-amble is inserted after a $2400^{th}$ data electrical level, a size of a sliding window of the mid-amble is 96 electrical levels. It can be learned that during synchronization detection, the size of the sliding window is reduced. An excessively large sliding window causes a loss in synchronization performance. For specific descriptions, refer to descriptions of the simulation diagram shown in FIG. 9 in the foregoing embodiment. Therefore, in this embodiment of this application, the sliding window is reduced, so that synchronization performance can be improved, and computational complexity of synchronization detection can be reduced.

In addition, in this embodiment of this application, in a case, determined in step 2, in which the difference in length between the last data sequence and the previous data sequence is large, correction is performed in the manner of step 3, so that sizes of sliding windows of the mid-amble and the post-amble are the same, and correspondingly, the mid-amble and the post-amble also have the same length. In this way, storage complexity of the terminal device is reduced. In addition, insertion is performed uniformly, so that computational complexity can be further reduced.

A communication apparatus provided in an embodiment of this application is described below.

In this application, the communication apparatus is divided into functional modules based on the foregoing method embodiments. For example, functional modules corresponding to functions may be obtained through division, or two or more functions may be integrated into one processing module. The integrated module may be implemented in a form of hardware, or may be implemented in a form of a software functional module. It should be noted that, in this application, module division is an example, and is merely a logical function division. In actual implementation, another division manner may be used. The following describes in detail the communication apparatuses in embodiments of this application with reference to FIG. 10 to FIG. 12.

FIG. 10 is a diagram of a structure of a communication apparatus according to an embodiment of this application. As shown in FIG. 10, the communication apparatus 1000 may correspondingly implement functions or steps implemented by a network device or a terminal device in the foregoing method embodiments.

In some possible implementations, the communication apparatus 1000 can correspondingly implement behavior and functions of the terminal device in the foregoing method embodiments. For example, the communication apparatus 1000 may be a terminal device, or may be a component (for example, an electrical level or a circuit) used in the terminal device. A transceiver unit 1100, for example, may be configured to perform all receiving or sending operations performed by the terminal device in the embodiment shown in FIG. 5. A processing unit 1200 is configured to perform all operations, except the receiving or sending operations, performed by the terminal device.

In a possible design, the communication apparatus 1000 includes the processing unit 1200 and the transceiver unit 1100.

The processing unit 1200 is configured to generate a first signal, where the first signal includes a first synchronization sequence, a second synchronization sequence, a synchronization sequence group, and a data sequence group, the data sequence group includes a first data sequence and a second data sequence, the synchronization sequence group includes a third synchronization sequence, a transmission time of any element in the first synchronization sequence is earlier than a transmission time of any element in any data sequence in the data sequence group, and a transmission time of any element in the second synchronization sequence is later than a transmission time of any element in any data sequence in the data sequence group;

a transmission time of any element in the first data sequence is earlier than a transmission time of any element in the second data sequence, and the third synchronization sequence exists between a transmission time of a last element in the first data sequence and a transmission time of a first element in the second data sequence; and

a length of the third synchronization sequence is the same as a length of the second synchronization sequence, and a length of the first synchronization sequence is greater than the length of the third synchronization sequence.

The transceiver unit 1100 is configured to send the first signal.
For example, synchronization sequences included in the synchronization sequence group have the same length.
For example, a difference in length between any two data sequences in the data sequence group is less than a first threshold.
For example, the first threshold is 2.
For example, a transmission time of a first element in the third synchronization sequence satisfies at least one of the following:

$$\text{T} + \text{round}\left(\frac{P*i}{m}\right)*T_s, \ \ \text{T} + \text{ceil}\left(\frac{P*i}{m}\right)*T_s, \text{ or } \ \text{T} + \text{floor}\left(\frac{P*i}{m}\right)*T_s$$

T is an end time of a last element in the first synchronization sequence, $T_s$ is a duration of each sequence element, round() represents a round-off function, ceil() represents a ceiling function, floor is a floor function, i is a positive integer ranging from 1 to m, m is a quantity of synchronization sequences in the synchronization sequence group, and P is a total length of data sequences in the data sequence group.

For example, the length M of the third synchronization sequence is $\frac{N}{2^\tau}$, N is the length of the first sequence, and $\tau$=1, 2, or 3.
For example, the quantity of synchronization sequences in the synchronization sequence group is determined based on a quantity of data sequences in the data sequence group.
For example, the quantity of synchronization sequences in the synchronization sequence group is S-1, and S is the quantity of data sequences in the data sequence group.
For example, the transceiver unit 1100 is further configured to receive indication information from the network device, where the indication information is used to determine the quantity of data sequences in the data sequence group.
In some possible implementations, the communication apparatus 1000 can correspondingly implement behavior and functions of the network device in the foregoing method embodiments. For example, the communication apparatus 1000 may be a network device, or may be a component (for example, an electrical level or a circuit) used in the network device. The transceiver unit 1100, for example, may be configured to perform all receiving or sending operations performed by the network device in the embodiment shown in FIG. 5. The processing unit 1200 is configured to perform all operations, except the receiving or sending operations, performed by the network device in the embodiment in FIG. 5.
In another possible design, the communication apparatus 1000 includes the processing unit 1200 and the transceiver unit 1100.
The transceiver unit 1100 is configured to receive a first signal, where the first signal includes a first synchronization sequence, a second synchronization sequence, a synchronization sequence group, and a data sequence group, the data sequence group includes a first data sequence and a second data sequence, the synchronization sequence group includes a third synchronization sequence, a transmission time of any element in the first synchronization sequence is earlier than a transmission time of any element in any data sequence in the data sequence group, and a transmission time of any element in the second synchronization sequence is later than a transmission time of any element in any data sequence in the data sequence group;

a transmission time of any element in the first data sequence is earlier than a transmission time of any element in the second data sequence, and the third synchronization sequence exists between a transmission time of a last element in the first data sequence and a transmission time of a first element in the second data sequence; and
a length of the third synchronization sequence is the same as a length of the second synchronization sequence, and a length of the first synchronization sequence is greater than the length of the third synchronization sequence.

The processing unit 1200 is configured to perform synchronization detection on the first synchronization sequence, the second synchronization sequence, and the third synchronization sequence.
For example, synchronization sequences included in the synchronization sequence group have the same length.
For example, a difference in length between any two data sequences in the data sequence group is less than a first threshold.
For example, the first threshold is 2.
For example, a transmission time of a first element in the third synchronization sequence satisfies at least one of the following:

$$\mathrm{T} + \mathrm{round}\left(\frac{P*i}{m}\right)*T_s, \ \ \mathrm{T} + \mathrm{ceil}\left(\frac{P*i}{m}\right)*T_s, \ \mathrm{or} \ \ \mathrm{T} + \mathrm{floor}\left(\frac{P*i}{m}\right)*T_s$$

T is an end time of a last element in the first synchronization sequence, $T_s$ is a duration of each sequence element, round() represents a round-off function, ceil() represents a ceiling function, floor is a floor function, i is a positive integer ranging from 1 to m, m is a quantity of synchronization sequences in the synchronization sequence group, and P is a total length of data sequences in the data sequence group.

For example, the length M of the third synchronization sequence is $\frac{N}{2^\tau}$, N is the length of the first sequence, and $\tau$=1, 2, or 3.

For example, the quantity of synchronization sequences in the synchronization sequence group is determined based on a quantity of data sequences in the data sequence group.

For example, the quantity of synchronization sequences in the synchronization sequence group is S-1, and S is the quantity of data sequences in the data sequence group.

For example, the transceiver unit 1100 is further configured to send indication information, where the indication information is used to determine the quantity of data sequences in the data sequence group.

For specific descriptions and beneficial effect of the apparatus embodiment shown in FIG. 10, refer to the descriptions of the foregoing method embodiments. Details are not described herein again.

The terminal device and the network device in embodiments of this application are described above, and possible product forms of the terminal device and the network device are described below. It should be understood that a product in any form that has a function of the terminal device in FIG. 10 or a product in any form that has a function of the network device in FIG. 10 falls within the protection scope of embodiments of this application. It should be further understood that the following descriptions are merely examples, and product forms of the network device and the terminal device in embodiments of this application are not limited thereto.

In a possible implementation, in the communication apparatus shown in FIG. 10, the processing unit 1200 may be one or more processors, the transceiver unit 1100 may be a transceiver, or the transceiver unit 1100 may be a sending unit and a receiving unit, the sending unit may be a transmitter, the receiving unit may be a receiver, and the sending unit and the receiving unit are integrated into one component, for example, a transceiver. In embodiments of this application, the processor and the transceiver may be coupled, or the like. A connection manner between the processor and the transceiver is not limited in embodiments of this application.

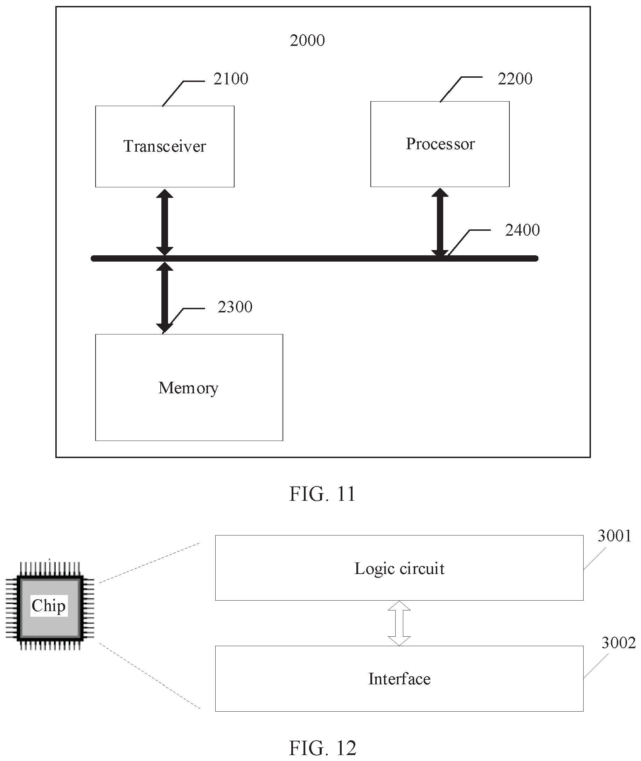

FIG. 11 is a diagram of a structure of another communication apparatus 2000 according to an embodiment of this application. The communication apparatus in FIG. 11 may be the foregoing terminal device, or may be the foregoing network device.

As shown in FIG. 11, the communication apparatus 2000 includes one or more processors 2200 and a transceiver 2100. The transceiver 2100 may implement a function of the transceiver unit 1100, and the processor 2200 may implement a function of the processing unit 1200.

In each implementation of the communication apparatus shown in FIG. 11, the transceiver may include a receiver and a transmitter. The receiver is configured to perform a receiving function (or operation). The transmitter is configured to perform a transmitting function (or operation). In addition, the transceiver is configured to communicate with another device/apparatus through a transmission medium.

Optionally, the communication apparatus 2000 may further include one or more memories 2300, configured to store program instructions and/or data. The memory 2300 is coupled to the processor 2200. The coupling in embodiments of this application may be an indirect coupling or a communication connection between apparatuses, units, or modules in an electrical form, a mechanical form, or another form, and is used for information exchange between the apparatuses, the units, or the modules. The processor 2200 may cooperate with the memory 2300. The processor 2200 may execute the program instructions stored in the memory 2300.

In this embodiment of this application, a specific connection medium between the transceiver 2100, the processor 2200, and the memory 2300 is not limited. In this embodiment of this application, the transceiver 2100, the processor 2200, and the memory 2300 are connected through a bus 2400 in FIG. 11. The bus is represented by using a bold line in FIG. 11. A manner of connection between other components is merely an example for description, and is not limited thereto. The bus may be classified into an address bus, a data bus, a control bus, and the like. For ease of representation, only one bold line is used to represent the bus in FIG. 11, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, a discrete hardware component, or the like. The processor can implement or execute the methods, the steps, and the logical block diagrams disclosed in embodiments of this application. The general-purpose processor may be a microprocessor, any conventional processor, or the like. The steps of the methods disclosed with reference to embodiments of this application may be directly implemented by a hardware processor, or may be implemented by using a combination of hardware and software modules in the processor, or the like.

In this embodiment of this application, the memory may include but is not limited to a non-volatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), a compact disc read-only memory (Compact Disc Read-Only Memory, CD-ROM), or the like. The memory is any storage medium that can be used to carry or store program code in a form of an instruction or a data structure and that can be read and/or written by a computer (for example, the communication apparatus shown in this application), but is not limited thereto. The memory in embodiments of this application may alternatively be a circuit or any other apparatus that can implement a storage function, and is configured to store program instructions and/or data.

The processor 2200 is mainly configured to process a communication protocol and communication data, control the entire communication apparatus, execute a software program, and process data of the software program. The memory 2300 is mainly configured to store the software program and data. The transceiver 2100 may include a control circuit and an antenna. The control circuit is mainly configured to: perform conversion between a baseband signal and a radio frequency signal, and process the radio frequency signal. The antenna is mainly configured to receive and send the radio frequency signal in a form of an electromagnetic wave. The input/output apparatus, for example, a touchscreen, a display, or a keyboard, is mainly configured to: receive data input by a user and output data to the user.

After the communication apparatus is powered on, the processor 2200 may read the software program in the memory 2300, explain and execute instructions of the software program, and process data of the software program. When data needs to be sent wirelessly, the processor 2200 performs baseband processing on to-be-sent data, and then outputs the baseband signal to a radio frequency circuit. The radio frequency circuit performs radio frequency processing on the baseband signal, and then sends, through the antenna, a radio frequency signal in an electromagnetic wave form. When data is sent to the communication apparatus, the radio frequency circuit receives a radio frequency signal through the antenna, converts the radio frequency signal into a baseband signal, and outputs the baseband signal to the processor 2200; and the processor 2200 converts the baseband signal into data, and processes the data.

In another implementation, the radio frequency circuit and the antenna may be disposed independently of the processor that performs baseband processing. For example, in a distributed scenario, the radio frequency circuit and the antenna may be remotely disposed independently of the communication apparatus.

It may be understood that the communication apparatus shown in embodiments of this application may further have more components and the like than those in FIG. 11. This is not limited in embodiments of this application. The methods performed by the processor and the transceiver are merely examples. For specific steps performed by the processor and the transceiver, refer to the methods described above.

In another possible implementation, in the communication apparatus shown in FIG. 10, the processing unit 1200 may be one or more logic circuits, and the transceiver unit 1100 may be an input/output interface, or referred to as a communication interface, an interface circuit, an interface, or the like. Alternatively, the transceiver unit 1100 may be a sending unit and a receiving unit. The sending unit may be an output interface, and the receiving unit may be an input interface. The sending unit and the receiving unit are integrated into one unit, for example, an input/output interface. As shown in FIG. 12, the communication apparatus shown in FIG. 12 includes a logic circuit 3001 and an interface 3002. In other words, the processing unit 1200 may be implemented through the logic circuit 3001, and the transceiver unit 1100 may be implemented through the interface 3002. The logic circuit 3001 may be a chip, a processing circuit, an integrated circuit, a system on chip (system on chip, SoC), or the like. The interface 3002 may be a communication interface, an input/output interface, a pin, or the like. For example, FIG. 12 shows an example in which the communication apparatus is a chip. The electrical level includes the logic circuit 3001 and the interface 3002.

In this embodiment of this application, the logic circuit and the interface may be further coupled to each other. A specific manner of connection between the logic circuit and the interface is not limited in embodiments of this application.

It may be understood that the communication apparatus shown in embodiments of this application may implement the method provided in embodiments of this application in a form of hardware, or may implement the method provided in embodiments of this application in a form of software. This is not limited in embodiments of this application.

An embodiment of this application further provides a wireless communication system. The wireless communication system includes a network device and a terminal device. The network device and the terminal device may be configured to perform the method in any one of the foregoing embodiments.

In addition, this application further provides a computer-readable storage medium. The computer-readable storage medium stores computer code. When the computer code is run on a computer, the computer is enabled to perform operations and/or processing performed by the network device and the terminal device in the method provided in this application.

This application further provides a computer program product. The computer program product includes computer code or a computer program. When the computer code or the computer program is run on a computer, operations and/or processing performed by the network device and the terminal device in the method provided in this application are/is performed.

In the several embodiments provided in this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on an actual requirement to implement the technical effect of the solutions provided in embodiments of this application.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of this application essentially, or the part making a contribution, or all or some of the technical solutions may be implemented in a form of a software product. The computer software product is stored in a readable storage medium, and includes several instructions for instructing a computer device (which may be a personal computer, a server, a network device, or the like) to perform all or some of the steps of the methods described in embodiments of this application. The readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A signal transmission method, comprising:

    generating a first signal, wherein the first signal comprises a first synchronization sequence, a second synchronization sequence, a synchronization sequence group, and a data sequence group, the data sequence group comprises a first data sequence and a second data sequence, the synchronization sequence group comprises a third synchronization sequence, a transmission time of any element in the first synchronization sequence is earlier than a transmission time of any element in any data sequence in the data sequence group, and a transmission time of any element in the second synchronization sequence is later than a transmission time of any element in any data sequence in the data sequence group;
    a transmission time of any element in the first data sequence is earlier than a transmission time of any element in the second data sequence, and the third synchronization sequence exists between a transmission time of a last element in the first data sequence and a transmission time of a first element in the second data sequence; and
    a length of the third synchronization sequence is the same as a length of the second synchronization sequence, and a length of the first synchronization sequence is greater than the length of the third synchronization sequence; and
    sending the first signal.

2. The method according to claim 1, wherein synchronization sequences contained in the synchronization sequence group have the same length.

3. The method according to claim 1 or 2, wherein a difference in length between any two data sequences in the data sequence group is less than a first threshold.

4. The method according to claim 3, wherein the first threshold is 2.

5. The method according to any one of claims 1 to 4, wherein a transmission time of a first element in the third synchronization sequence satisfies at least one of the following:

$$\mathrm{T} + \mathrm{round}\left(\frac{P*i}{m}\right) * T_s, \ \ \mathrm{T} + \mathrm{ceil}\left(\frac{P*i}{m}\right) * T_s, \ \mathrm{or} \ \ \mathrm{T} + \mathrm{floor}\left(\frac{P*i}{m}\right) * T_s,$$

wherein
T is an end time of a last element in the first synchronization sequence, $T_s$ is a duration of each sequence element, round() represents a round-off function, ceil() represents a ceiling function, floor is a floor function, i is a positive integer ranging from 1 to m, m is a quantity of synchronization sequences in the synchronization sequence group, and P is a total length of data sequences in the data sequence group.

6. The method according to any one of claims 1 to 5, wherein the length M of the third synchronization sequence is $\frac{N}{2^\tau}$, N is the length of the first synchronization sequence, and $\tau$=1, 2, or 3.

7. The method according to any one of claims 1 to 6, wherein the quantity of synchronization sequences in the synchronization sequence group is determined based on a quantity of data sequences in the data sequence group.

8. The method according to claim 7, wherein the quantity of synchronization sequences in the synchronization sequence group is S-1, and S is the quantity of data sequences in the data sequence group.

9. The method according to claim 7 or 8, wherein the method further comprises:
receiving indication information from a network device, wherein the indication information is used to determine the quantity of data sequences in the data sequence group.

10. A signal transmission method, comprising:

receiving a first signal, wherein the first signal comprises a first synchronization sequence, a second synchronization sequence, a synchronization sequence group, and a data sequence group, the data sequence group comprises a first data sequence and a second data sequence, the synchronization sequence group comprises a third synchronization sequence, a transmission time of any element in the first synchronization sequence is earlier than a transmission time of any element in any data sequence in the data sequence group, and a transmission time of any element in the second synchronization sequence is later than a transmission time of any element in any data sequence in the data sequence group;
a transmission time of any element in the first data sequence is earlier than a transmission time of any element in the second data sequence, and the third synchronization sequence exists between a transmission time of a last element in the first data sequence and a transmission time of a first element in the second data sequence; and
a length of the third synchronization sequence is the same as a length of the second synchronization sequence, and a length of the first synchronization sequence is greater than the length of the third synchronization sequence; and
performing synchronization detection on the first synchronization sequence, the second synchronization sequence, and the third synchronization sequence.

11. The method according to claim 10, wherein synchronization sequences contained in the synchronization sequence group have the same length.

12. The method according to claim 10 or 11, wherein a difference in length between any two data sequences in the data sequence group is less than a first threshold.

13. The method according to claim 12, wherein the first threshold is 2.

14. The method according to any one of claims 10 to 13, wherein a transmission time of a first element in the third synchronization sequence satisfies at least one of the following:

$$\mathrm{T} + \mathrm{round}\left(\frac{P*i}{m}\right) * T_s, \ \ \mathrm{T} + \mathrm{ceil}\left(\frac{P*i}{m}\right) * T_s, \ \mathrm{or} \ \ \mathrm{T} + \mathrm{floor}\left(\frac{P*i}{m}\right) * T_s,$$

wherein
T is an end time of a last element in the first synchronization sequence, $T_s$ is a duration of each sequence element, round() represents a round-off function, ceil() represents a ceiling function, floor is a floor function, i is a positive integer ranging from 1 to m, m is a quantity of synchronization sequences in the synchronization sequence group, and P is a total length of data sequences in the data sequence group.

15. The method according to any one of claims 10 to 14, wherein the length M of the third synchronization sequence is $\frac{N}{2^\tau}$, N is the length of the first sequence, and $\tau$=1, 2, or 3.

16. The method according to any one of claims 10 to 15, wherein the quantity of synchronization sequences in the synchronization sequence group is determined based on a quantity of data sequences in the data sequence group.

17. The method according to claim 16, wherein the quantity of synchronization sequences in the synchronization sequence group is S-1, and S is the quantity of data sequences in the data sequence group.

18. The method according to claim 16 or 17, wherein the method further comprises:
    sending indication information, wherein the indication information is used to determine the quantity of data sequences in the data sequence group.

19. A communication apparatus, comprising a unit configured to perform the method according to any one of claims 1 to 9, or comprising a unit configured to perform the method according to any one of claims 10 to 18.

20. A communication apparatus, comprising a processor, wherein the processor is configured to perform the method according to any one of claims 1 to 9, or the processor is configured to perform the method according to any one of claims 10 to 18.

21. A computer-readable storage medium, wherein the computer-readable storage medium is configured to store a computer program, and when the computer program is executed, the method according to any one of claims 1 to 9 is performed, or the method according to any one of claims 10 to 18 is performed.

22. A communication system, comprising a first communication apparatus and a second communication apparatus, wherein the first communication apparatus is configured to perform the method according to any one of claims 1 to 9, and the second communication apparatus is configured to perform the method according to any one of claims 10 to 18.

23. A communication method, comprising:

    performing, by a first communication apparatus, the method according to any one of claims 1 to 9; and
    performing, by a second communication apparatus, the method according to any one of claims 10 to 18.

Terminal
device 1

Network
device

Terminal
device 2

FIG. 1

Bit 1

1

0

Bit 0

1

0

FIG. 2

| Preamble (preamble) | PUSCH | Post-amble (post-amble) |
|---|---|---|

FIG. 3

Sampling point obtained through sampling at a reference sampling frequency

Ideal end position

Preamble (preamble)

Reference duration of one chip

Post-amble (post-amble)

Actual end position

FIG. 4

Terminal device

Network device

101: Generate a first signal, where the first signal includes a first synchronization sequence, a second synchronization sequence, a synchronization sequence group, and a data sequence group, the data sequence group includes a first data sequence and a second data sequence, and the synchronization sequence group includes a third synchronization sequence

102: First signal

103: Perform synchronization detection on the first synchronization sequence, the second synchronization sequence, and the third synchronization sequence

FIG. 5

| First synchronization sequence | First data sequence | Third synchronization sequence | Second data sequence | Second synchronization sequence |
| --- | --- | --- | --- | --- |

FIG. 6

EP 4 783 510 A1

| First synchronization sequence | Data sequence 1 | Synchronization sequence 1 | Data sequence 2 | Synchronization sequence 2 | Data sequence 3 | Synchronization sequence 3 | Data sequence 4 | Second synchronization sequence |
|---|---|---|---|---|---|---|---|---|

FIG. 7

FIG. 8

A largest SFO is 2%, and a code rate is 1/3
for tail biting convolutional codes

FIG. 9

FIG. 10

2000

2100

Transceiver

2200

Processor

2400

2300

Memory

FIG. 11

3001

Logic circuit

3002

Interface

Chip

FIG. 12

## INTERNATIONAL SEARCH REPORT

| International application No. |
|---|
| **PCT/CN2024/123662** |

**A.  CLASSIFICATION OF SUBJECT MATTER**

H04L 5/00(2006.01)i

According to International Patent Classification (IPC) or to both national classification and IPC

**B.  FIELDS SEARCHED**

Minimum documentation searched (classification system followed by classification symbols)

IPC: H04L 5/-

Documentation searched other than minimum documentation to the extent that such documents are included in the fields searched

Electronic data base consulted during the international search (name of data base and, where practicable, search terms used)

CNABS, CNTXT, ENTXTC, WPABS, ENTXT, IEEE, CNKI, BAIDU, BING, 3GPP: 同步, 序列, 相关, 卷积, 前导码, 中间训练序列, 复杂度, 分散, 发送时间, synchronization, sequence, convolution, preamble, mid-amble, Sampling frequency offset

**C.  DOCUMENTS CONSIDERED TO BE RELEVANT**

| Category* | Citation of document, with indication, where appropriate, of the relevant passages | Relevant to claim No. |
|---|---|---|
| A | CN 101360076 A (ZTE CORP.) 04 February 2009 (2009-02-04)<br>entire document | 1-23 |
| A | CN 107113721 A (QUALCOMM INC.) 29 August 2017 (2017-08-29)<br>entire document | 1-23 |
| A | CN 112118086 A (CHENGDU HUAWEI TECHNOLOGIES CO., LTD.) 22 December 2020<br>(2020-12-22)<br>entire document | 1-23 |
| A | US 2019253172 A1 (QUALCOMM INC.) 15 August 2019 (2019-08-15)<br>entire document | 1-23 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 December 2024** | **13 December 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/123662**

| Patent document cited in search report | | | Publication date (day/month/year) | Patent family member(s) | | | Publication date (day/month/year) |
|---|---|---|---|---|---|---|---|
| CN | 101360076 | A | 04 February 2009 | None | | | |
| CN | 107113721 | A | 29 August 2017 | TW | 201618577 | A | 16 May 2016 |
| | | | | EP | 3618510 | A1 | 04 March 2020 |
| | | | | EP | 3618510 | B1 | 06 April 2022 |
| | | | | EP | 3213578 | A1 | 06 September 2017 |
| | | | | EP | 3213578 | B1 | 24 July 2019 |
| | | | | US | 2016119931 | A1 | 28 April 2016 |
| | | | | US | 10033578 | B2 | 24 July 2018 |
| | | | | KR | 20170072219 | A | 26 June 2017 |
| | | | | KR | 102456487 | B1 | 18 October 2022 |
| | | | | EP | 3213590 | A1 | 06 September 2017 |
| | | | | EP | 3213590 | B1 | 23 October 2019 |
| | | | | KR | 20170072218 | A | 26 June 2017 |
| | | | | KR | 102459258 | B1 | 25 October 2022 |
| | | | | WO | 2016069145 | A1 | 06 May 2016 |
| | | | | JP | 2017537509 | A | 14 December 2017 |
| | | | | JP | 6591538 | B2 | 16 October 2019 |
| | | | | KR | 20220148311 | A | 04 November 2022 |
| | | | | KR | 102569617 | B1 | 22 August 2023 |
| | | | | JP | 2017533648 | A | 09 November 2017 |
| | | | | JP | 6568939 | B2 | 28 August 2019 |
| | | | | WO | 2016069146 | A1 | 06 May 2016 |
| | | | | US | 2016119184 | A1 | 28 April 2016 |
| | | | | US | 10033577 | B2 | 24 July 2018 |
| CN | 112118086 | A | 22 December 2020 | None | | | |
| US | 2019253172 | A1 | 15 August 2019 | US | 11075709 | B2 | 27 July 2021 |
| | | | | US | 2021399823 | A1 | 23 December 2021 |
| | | | | EP | 3753139 | A1 | 23 December 2020 |
| | | | | EP | 3753139 | B1 | 21 September 2022 |
| | | | | TW | 201937874 | A | 16 September 2019 |
| | | | | WO | 2019161074 | A1 | 22 August 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311382150